# EUROPÄISCHE PATENTSCHRIFT

(11) **EP 2 142 773 B1**
(45) Veröffentlichungstag und Bekanntmachung des Hinweises auf die Patenterteilung: **22.09.2010**
(21) Anmeldenummer: 08716977.7
(22) Anmeldetag: 20.02.2008
(51) Int. Cl.: F01N 3/20, F01N 11/00

(54) **VERFAHREN ZUM HEIZEN EINES REDUKTIONSMITTELDOSIERVENTILS BEI EINEM SCR-SYSTEM ZUR ABGASNACHBEHANDLUNG EINES VERBRENNUNGSMOTORS**
METHOD FOR HEATING A REDUCING AGENT METERING VALVE IN AN SCR SYSTEM FOR EXHAUST GAS AFTER-TREATMENT IN AN INTERNAL COMBUSTION ENGINE
PROCÉDÉ POUR CHAUFFER UNE SOUPAPE DE DOSAGE D'AGENT RÉDUCTEUR DANS UN SYSTÈME DE RÉDUCTION CATALYTIQUE SÉLECTIVE POUR LE TRAITEMENT SECONDAIRE DES GAZ D'ÉCHAPPEMENT D'UN MOTEUR À COMBUSTION INTERNE

(30) Priorität: 03.04.2007 DE 102007017458
(43) Veröffentlichungstag der Anmeldung: 13.01.2010
(73) Patentinhaber: Robert Bosch GmbH, 70442 Stuttgart (DE); Daimler AG, 70567 Stuttgart (DE)
(72) Erfinder: BECKMANN, Thomas, 70197 Stuttgart (DE); HORN, Matthias, 71691 Freiberg (DE); MUELLER, Andreas, 70182 Stuttgart (DE)
(86) Internationale Anmeldenummer: PCT/EP2008/052068
(87) Internationale Veröffentlichungsnummer: WO 2008/119599

(56) Entgegenhaltungen:
- DE-A1- 10 341 996
- US-A1- 2006 013 704

## Beschreibung

### Stand der Technik

Die Erfindung betrifft ein Verfahren nach dem Oberbegriff des Anspruchs 1 sowie ein Steuergerät nach dem Oberbegriff des Anspruchs 11. Elektromagnetisch steuerbare Reduktionsmitteldosierventile weisen eine Magnetspule auf, deren Magnetfeld bei einem ausreichend großen Spulenstrom eine Düsennadel von einem Dichtsitz abhebt und so das Reduktionsmitteldosierventil öffnet.

Dabei dient ein erstes Stromprofil des Spulenstroms dazu, das Reduktionsmitteldosierventil zu öffnen und/oder offen zu halten, um so einen Durchfluss von Reduktionsmittel zu steuern. Ein solches Verfahren sowie ein solches Steuergerät ist für eine Verwendung in Kraftfahrzeugen wie Personenkraftwagen und Lastkraftwagen aus der Verüffentlichung Dieselmotor-Management, 4. Auflage, Friedrich Vieweg und Sohn Verlag, ISBN 3-528-23873-9, dort Seite 338, bekannt.

Die Druckschrift US 2006/0013704 A1 zeigt eine Dosiervorrichtung zur Abgabe von Reduktionsmitteln zum Abgas eines laufenden Verbrennungmotors. Um ein Einfrieren des Dosiersystems bei abgestelltem Verbrennungsmotor zu verhindern, wird dort vorgeschlagen, die Temperatur der Dosiervorrichtung bei abgestelltem Verbrennungsmotor zu überwachen und eine Wicklung einer elektromagnetisch steuerbaren Dosierpumpe bei Unterschreiten einer Mindesttemperatur als Heizwicklung zu verwenden. Die Wicklung der Dosierpumpe wird nach der Druckschrift D1 bei laufendem Verbrennungsmotor mit einem ersten Stromprofil zur Dosierung angesteuert. Bei stehendem Verbrennungsmotor wird die Wicklung temperaturabhängig mit einem zweiten Stromprofil oder gar nicht angesteuert.

Die selektive Reduktion von Stickoxiden (SCR = selective catalytic reduction) beruht darauf, dass ausgewählte Reduktionsmittel Stickoxide (NOx) auch in Gegenwart von Sauerstoff reduzieren. Selektiv bedeutet hierbei, dass die Oxidation des Reduktionsmittels bevorzugt (selektiv) mit dem Sauerstoff der Stickoxide und nicht mit dem im Abgas wesentlich reichlicher vorhandenen molekularen Sauerstoff erfolgt. Ammoniak (NH₃) hat sich hierbei als Reduktionsmittel mit der höchsten Selektivität bewährt. Im Kraftfahrzeug wird Ammoniak einer mitgeführten Harnstoff-Wasser-Lösung zum Abgas dosiert. Harnstoff (NH₂)₂CO weist eine sehr gute Löslichkeit in Wasser auf und kann daher einfach zum Abgas dosiert werden. Wenn in dieser Anmeldung von einem Reduktionsmittel die Rede ist, soll dieser Begriff auch Vorprodukte, Trägersubstanzen und -medien wie Wasser bezeichnen, in denen eine Trägersubstanz oder das Reduktionsmittel in gelöster Form enthalten ist. Daher wird auch die Harnstoff-Wasser-Lösung im Folgenden als zu dosierendes Reduktionsmittel bezeichnet.

Eine unter dem Handelsnamen AdBlue bekannte Harnstoff-Wasser-Lösung mit einer Massenkonzentration von 32,5 % Harnstoff besitzt einen Gefrierpunkt bei -11°C. Dort bildet sich ein Eutektikum, wodurch ein Entmischen der Lösung im Fall des Einfrierens ausgeschlossen wird.

Auch wenn eine unerwünschte Entmischung bei dieser Zusammensetzung nicht auftritt, muss ein Einfrieren des Reduktionsmitteldosierventils und anderer Komponenten des Systems, zum Beispiel ein Einfrieren von Leitungen, nach Möglichkeit verhindert werden. Bei eingefrorenem System könnte das Reduktionsmittel nicht mehr dosiert werden, was erhöhte Stickoxidemissionen des Kraftfahrzeuges zur Folge hätte. Wenn das System unter ungünstigen Umweltbedingungen dennoch einfrieren sollte, muss es im Betrieb des Kraftfahrzeugs wieder aufgetaut werden können. Dies gilt insbesondere für das in der Regel aus diversen Metallen und Kunststoffen bestehende Reduktionsmitteldosierventil. Das Reduktionsmitteldosierventil ist unmittelbar am Abgasstrang angeordnet. Daher besteht die Gefahr, dass es bei heißer Abgasanlage und heißem Abgas überhitzt wird. Um eine solche thermische Schädigung zu vermeiden, ist das Reduktionsmitteldosierventil in der Regel mit einem Kühlkörper versehen, der eine Ableitung großer Wärmemengen an die Umgebung erlaubt. Im umgekehrten Fall niedriger Temperaturen erhöht dieser Kühlkörper das Risiko eines Einfrierens des Reduktionsmitteldosierventils und erschwert das Auftauen eines eingefrorenen Reduktionsmitteldosierventils.

### Offenbarung der Erfindung

Vor diesem Hintergrund besteht die Aufgabe der Erfindung darin, ein Einfrieren eines Reduktionsmitteldosierventils zu verhindern und/oder ein Auftauen eines solchen Reduktionsmitteldosierventils bei laufendem Verbrennungsmotor mit möglichst einfachen Mitteln und möglichst geringen Kosten sowie möglichst hoher Betriebssicherheit zu ermöglichen.

Diese Aufgabe wird jeweils mit den Merkmalen der unabhängigen Ansprüche gelöst. Das Ermitteln eines Maßes für die Temperatur des Reduktionsmitteldosierventils und der Vergleich des Maßes mit einem Schwellenwert erlaubt eine Erkennung von Situationen, in denen die Gefahr eines Einfrierens des Reduktionsmitteldosierventils besteht.

Erfindungsgemäß wird das Reduktionsmitteldosierventil in einer solchen Situation mit einem zweiten Stromprofil angesteuert, das sich von dem ersten Stromprofil unterscheidet. Während das erste Stromprofil zur Steuerung des Durchflusses durch das Reduktionsmitteldosierventil dient, erfolgt die Ausgabe des zweiten Dosierventils mit dem Ziel, im Ohmschen Widerstand der Spule Wärme freizusetzen, die das Reduktionsmitteldosierventil von innen heraus erwärmt.

Durch diese Mehrfachnutzung der Magnetspule des elektromagnetisch steuerbaren Reduktionsmitteldosierventils zur Steuerung des Durchflussquerschnitts und als Heizwicklung kann auf eine separate Heizvorrichtung für das Reduktionsmitteldosierventil verzichtet werden. Als Folge vereinfacht sich der Aufbau des Reduktionsmitteldosierventils. Ferner verringert sich sein Platzbedarf und seine Herstellungskosten, während sich seine Betriebssicherheit gleichzeitig erhöht.

Weitere Vorteile ergeben sich aus den abhängigen Ansprüche, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

### Kurze Beschreibung der Zeichnungen

Ausführungsbeispiele der Erfindung sind in den Zeichnungen dargestellt und werden in der nachfolgenden Beschreibung näher erläutert. Es zeigen, jeweils in schematischer Form:
- Figur 1: das technische Umfeld der Erfindung;
- Figur 2: Ausgestaltungen eines ersten und eines zweiten Stromprofils;
- Figur 3: ein Ersatzschaltbild des Reduktionsmitteldosierventils zusammen mit einer Endstufe einer Ausgestaltung des Steuergeräts;
- Figur 4: eine weitere Ausgestaltung in Form eines Ersatzschaltbildes des Reduktionsmitteldosierventils zusammen mit einer Endstufe; und
- Figur 5: eine Ausgestaltung eines erfindungsgemäßen Verfahrens.

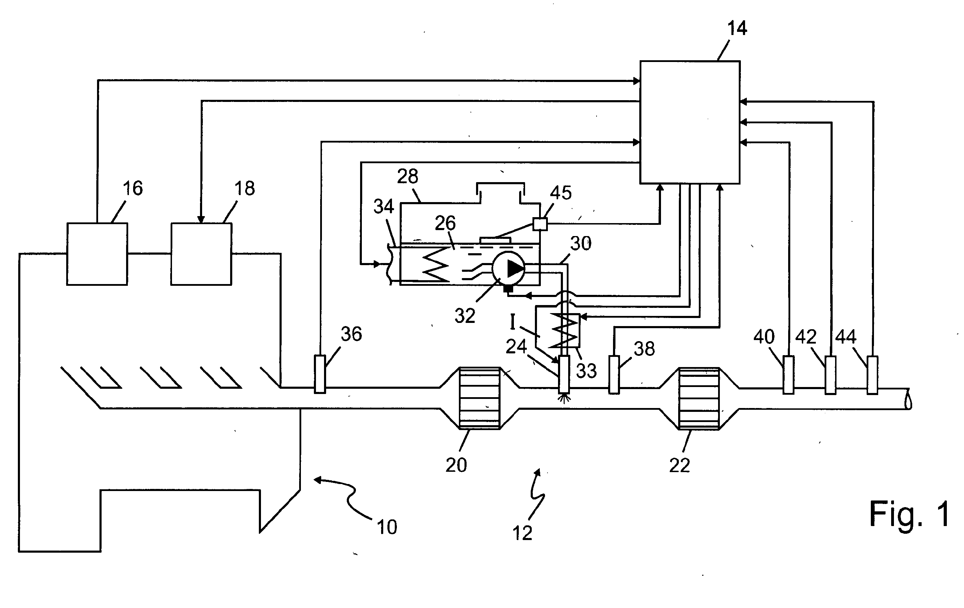

Figur 1 zeigt einen Verbrennungsmotor 10 mit einem Abgassystem 12 und einem Steuergerät 14. Bei dem Steuergerät 14 handelt es sich bevorzugt um das Steuergerät, das den Verbrennungsmotor 10 steuert und dazu Signale von einer Sensorik 16 über Betriebsparameter des Verbrennungsmotors 10 empfängt und zu Stellgrößen für Stellglieder 18 des Verbrennungsmotors 10 verarbeitet. Die Signale der Sensorik 16 erlauben dem Steuergerät typischerweise eine Bestimmung der vom Verbrennungsmotor 10 angesaugten Luftmasse, der Drehwinkelposition einer Kurbelwelle des Verbrennungsmotors 10, einer Temperatur des Verbrennungsmotors 10, etc. Aus diesen Signalen bildet das Steuergerät 14 typischerweise Stellgrößen zur Dosierung von Kraftstoff in Brennräume des Verbrennungsmotors 10, zur Einstellung eines Ladedrucks eines Abgasturboladers, einer Abgasrückführrate, etc. Alternativ handelt es sich bei dem Steuergerät 14 um ein separates Steuergerät, das mit dem Steuergerät des Verbrennungsmotors 10 über ein Bussystem kommuniziert.

Das Abgassystem 12 weist einen Oxidationskatalysator 20 und einen SCR-Katalysator 22 auf. Zwischen dem Oxidationskatalysator 20 und dem SCR-Katalysator 22 ist ein Reduktionsmitteldosierventil 24 angeordnet, über das Reduktionsmittel 26 aus einem Vorratsbehälter 28 zum Abgas dosiert wird. Das Reduktionsmitteldosierventil 24 wird elektromagnetisch betätigt und dazu von dem Steuergerät 14 mit einem Steuerstrom I, der eine Magnetspule des Reduktionsmitteldosierventils 24 durchströmt, angesteuert. Dabei erfolgt die Versorgung des Reduktionsmitteldosierventils 24 mit Reduktionsmittel 26 über eine Zuleitung 30, die von einer Pumpe 32 mit dem Reduktionsmittel 26 gespeist wird. Die Pumpe 32 ist bevorzugt als steuerbare Saug- und Druckpumpe ausgeführt, die im Druckbetrieb den zur Dosierung von Reduktionsmittel 26 in das Abgassystem 12 notwendigen Einspritzdruck erzeugt und die im Saugbetrieb ein Entleeren der Zuleitung 30 von Reduktionsmittel 26 erlaubt. Dazu wird die Pumpe 32 ebenfalls vom Steuergerät 14 gesteuert. Eine solche Entleerung erfolgt zum Beispiel zwischen zwei Fahrzyklen, beziehungsweise am Ende eines Fahrzyklus, um ein zwischenzeitliches Einfrieren des Reduktionsmittels 26 in der meist als Schlauchleitung ausgeführten Zuleitung 30 und im Reduktionsmitteldosierventil 24 zu vermeiden.

Um ein Einfrieren des Reduktionsmittels 26 zu vermeiden, ist die Zuleitung 30 ferner mit einer Schlauchheizung 33 ausgestattet, die ebenfalls vom Steuergerät 14 gesteuert wird. Alternativ oder ergänzend ist eine weitere Heizung 34 im Vorratsbehälter 28 angeordnet, die auch vom Steuergerät 14 gesteuert wird.

Zur Steuerung der selektiven katalytischen Reduktion von Stickoxiden durch ein Dosieren von Reduktionsmittel 26 zum Abgassystem 12 des Verbrennungsmotors 10 sind ferner verschiedene Sensoren 36, 38, 40, 42 und 44 vorgesehen, die Betriebsparameter des Abgassystems 12 erfassen und entsprechende Messwerte an das Steuergerät 14 liefern. Bei den Sensoren 36 und 40 handelt es sich in einer Ausgestaltung um Temperatursensoren, während der Sensor 38 bevorzugt zur Erfassung der NOx-Konzentration im Abgas vor dem SCR-Katalysator 22 dient. Ein weitere NOx-Sensor 42 ist hinter dem SCR-Katalysator 22 angeordnet. Der Sensor 44 erfasst eine Ammoniak-Konzentration im Abgas hinter dem SCR-Katalysator 22 und erlaubt so die Feststellung einer Überdosierung von Reduktionsmittel 26. Ein Füllstandssensor 45 erfasst den Reduktionsmittel-Füllstand im Vorratsbehälter 28 und liefert ein entsprechendes Signal an das Steuergerät 14.

Die Figur 1 zeigt damit insbesondere das technische Umfeld, in dem die Erfindung verwendet wird. Dabei versteht es sich, dass die Erfindung nicht auf die in der Figur 1 dargestellte Konfiguration aus Verbrennungsmotor 10 mit einem Abgassystem 12 und sämtlichen dargestellten Sensoren 16, 36, 38, 40, 42, 44, 45 und 46 und Stellgliedern 18, 24, 32, 33, 34 beschränkt ist.

Mit Blick auf Verfahrensaspekte der Erfindung ist wesentlich, dass das Reduktionsmitteldosierventil 24 im Abgassystem 12 des Verbrennungsmotors 10 angeordnet ist und für eine Dosierung von Reduktionsmittel 26 mit einem ersten Stromprofil angesteuert wird, dass ein Maß für die Temperatur des Reduktionsmitteldosierventils 24 ermittelt und mit einem Schwellenwert verglichen wird, und dass dann, wenn die ermittelte Temperatur niedriger liegt als der Schwellenwert, eine Ansteuerung des Reduktionsmitteldosierventils 24 mit einem zweiten Stromprofil erfolgt, das sich von dem ersten Stromprofil unterscheidet.

Mit Blick auf das zur Steuerung des Reduktionsmitteldosierventils 24 eingerichtete Steuergerät 14 ist wesentlich, dass das Steuergerät 14 nicht nur dazu eingerichtet ist, das Reduktionsmitteldosierventil 24 für eine Dosierung von Reduktionsmittel mit einem ersten Stromprofil anzusteuern, sondern darüber hinaus dazu eingerichtet ist, ein Maß für die Temperatur des Reduktionsmitteldosierventils zu ermitteln, mit einem Schwellenwert zu vergleichen, und dann, wenn die ermittelte Temperatur niedriger liegt als der Schwellenwert, das Reduktionsmitteldosierventil 24 mit einem zweiten Stromprofil anzusteuern, das sich von dem ersten Stromprofil unterscheidet. Ausgestaltungen des Steuergeräts 14 sind dazu eingerichtet, einen Ablauf eines Verfahrens nach einem der abhängigen Verfahrensansprüche zu steuern.

Der Schwellenwert ist bevorzugt so vorbestimmt, dass er Temperaturbereiche mit und ohne Einfriergefahr voneinander trennt. Die Temperatur des

Reduktionsmitteldosierventils wird gemessen und/oder modelliert. Eine Messung erfolgt in einer Ausgestaltung durch einen speziellen Temperatursensor, der in der Figur 1 nicht dargestellt ist. In einer weiteren Ausgestaltung kann die Temperatur dadurch ermittelt werden, dass der Strom durch die Magnetspule des Reduktionsmitteldosierventils 24 gemessen wird, über das Ohmsche Gesetz auf deren Widerstand und über den Widerstand auf die Temperatur der Magnetspule als Maß für die Temperatur des Reduktionsmitteldosierventils 24 geschlossen wird. Bei Verbrennungsmotoren 10, bei denen die Umgebungstemperatur, beispielsweise die Ansauglufttemperatur erfasst wird, kann ein Maß für die Temperatur des Reduktionsmitteldosierventils 24 auf der Basis der erfassten Umgebungstemperatur und einer im Abgassystem 12 gemessenen oder für das Abgassystem 12 modellierten Temperatur modelliert werden. Dabei wird unter einer Modellierung ein rechnerisches Nachbilden der Temperatur in Abhängigkeit von im Steuergerät 14 abgelegten Zusammenhängen unter ergänzender Berücksichtigung der genannten Temperaturen und/oder anderer Betriebsparameter des Verbrennungsmotors 10 oder des Abgassystems 12 verstanden.

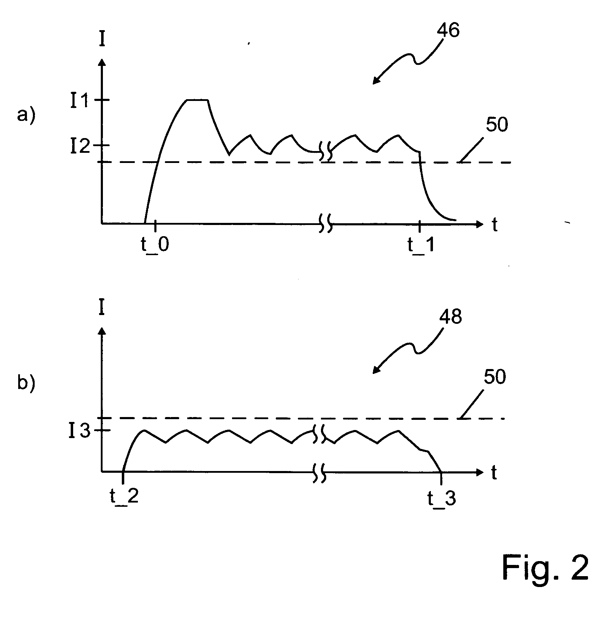

Die Figur 2 zeigt in ihrem Teil a) eine Ausgestaltung eines ersten Stromprofils 46 und in ihrem Teil b) eine Ausgestaltung eines zweiten Stromprofils 48. Dabei markiert die horizontale gestrichelte Linie 50 sowohl in der Figur 2a) als auch in der Figur 2b) jeweils ein Stromniveau, das zum Öffnen und Offenhalten des Reduktionsmitteldosierventils 24 erforderlich ist. Das erste Stromprofil 46 weist einen ersten Teil auf, in dem der Strom I durch die Magnetspule des Reduktionsmitteldosierventils 24 auf einen ersten, vergleichsweise hohen Wert I1 eingestellt wird, um das Reduktionsmitteldosierventil 24 schnell zu öffnen. Im Anschluss an den ersten Teil weist das erste Stromprofil 46 einen zweiten Teil auf, in dem ein niedrigerer Strom I2 eingestellt wird. Der niedrigere Strom I2 verläuft jedoch noch oberhalb der gestrichelten Linie 50, die ein Haltestromniveau markiert. Im Ergebnis wird das Reduktionsmitteldosierventil 24 mit dem ersten Stromprofil 46 zwischen den Zeitpunkten t_0 und t_1 geöffnet und offengehalten.

Im Gegensatz dazu weist das zweite Stromprofil 48 ein mittleres Stromniveau E3 auf, das unterhalb des zum Öffnen und Offenhalten des Reduktionsmitteldosierventils 24 notwendigen Haltestromniveaus 50 liegt, so dass das Reduktionsmitteldosierventil 24 durch das zwischen den Zeitpunkten t_2 und t_3 erzeugte zweite Stromprofil 48 nicht geöffnet wird. Die Figur 2b) zeigt damit insbesondere eine Ausgestaltung eines zweiten Stromprofils 48, das sich von einem ersten Stromprofil 46, mit dem das Reduktionsmitteldosierventil 24 für eine Dosierung von Reduktionsmittel 26 angesteuert (geöffnet) wird, unterscheidet.

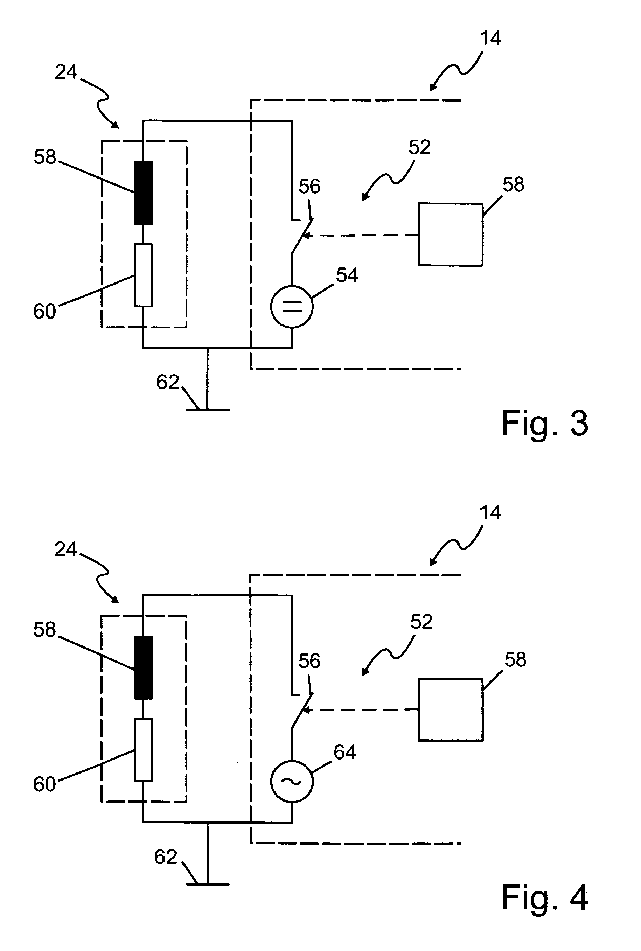

Figur 3 zeigt ein Ersatzschaltbild des Reduktionsmitteldosierventils 24 zusammen mit einer Endstufe 52 einer Ausgestaltung des Steuergeräts 14. Die Endstufe 52 weist eine Gleichspannungsquelle 54 und einen Schalter 56 auf, der von einer weiteren Komponente 58 des Steuergeräts 14 betätigt wird. Der Block 58 fasst insofern die Hardware-Aspekte einer Verarbeitung von Eingangssignalen durch das Steuergerät 14, also insbesondere eine Eingangssignalaufbereitung und Verarbeitung mit Hilfe eines in einem Speicher des Steuergeräts 14 abgelegten Programms zusammen. Im Ersatzschaltbild des Reduktionsmitteldosierventils 24 ist die Magnetspule als Reihenschaltung aus einer reinen Induktivität 58 und einem Ohmschen Widerstand 60 dargestellt. Jeweils ein Anschluss der Gleichspannungsquelle 54 und der Magnetspule des Reduktionsmitteldosierventils 24 ist an ein Bezugspotential 62, beispielsweise eine Steuergerätemasse, angeschlossen. Über den Schalter 56 werden die jeweils komplementären Anschlüsse der Magnetspule und der Gleichspannungsquelle 54 miteinander verbunden oder voneinander getrennt.

Die Stromprofile 46 und 48 aus der Figur 2 werden durch die Ausgestaltung der Figur 52 der Figur 3 durch eine entsprechende Steuerung des Schalters 56 erzeugt. Das Stromniveau I1 ergibt sich zum Beispiel dadurch, dass der Schalter 56 so lange geschlossen wird, bis die Induktionsspannung der Induktivität 58 so weit abgeklungen ist, dass sich über der Magnetspule die volle oder nahezu volle Gleichspannung der Gleichspannungsquelle 54 einstellt. Die von der Gleichspannungsquelle 54 bereitgestellte Gleichspannung ist bevorzugt größer als eine Schwellenspannung, bei der ein nicht eingefrorenes Reduktionsmitteldosierventil 24 öffnet. Die Stromniveaus I2 und I3 ergeben sich dagegen dadurch, dass der Schalter 56 bei noch nicht abgeklungenen Induktionsspannungen abwechselnd geschlossen (Stromanstieg) und geöffnet (Stromabfall) wird.

Mit jedem Stromfluss durch die Magnetspule des Reduktionsmitteldosierventils 24 ist wegen des Ohmschen Widerstandes 60 eine Freisetzung Joule'scher Wärme verbunden. Wenn das Reduktionsmitteldosierventil 24 mit dem ersten Stromprofil 46 angesteuert wird, um Reduktionsmittel 26 zu dosieren, kann diese Wärmefreisetzung störend sein. Dies gilt insbesondere dann, wenn die Dosierung bei heißem Abgassystem 12 und heißem Abgas erfolgt, weil dann die Gefahr einer thermischen Beschädigung des Reduktionsmitteldosierventils 24 besteht. Die Verringerung der Stromstärke vom Wert I1 auf den Wert I2, der immer noch zum Offenhalten des Reduktionsmitteldosierventils 24 ausreicht, verringert die in diesem Fall störende Freisetzung von Wärme durch den Ohmschen Widerstand 60 der Magnetspule.

Bei niedriger Temperatur des Abgassystems 12 und/oder des Abgases des Verbrennungsmotors 10 wird die Freisetzung Joule'scher Wärme im Ohmschen Widerstand 60 für eine erwünschte Aufheizung des Reduktionsmitteldosierventils 24 verwendet. Das zweite Stromprofil 48 in der Figur 2 stellt in diesem Zusammenhang eine Ausgestaltung eines Stromprofils dar, bei dem ein mittlerer Strom I3 zum Heizen des Reduktionsmitteldosierventils 24 erzeugt wird, der aber noch so gering ist, dass eine Öffnung des Reduktionsmitteldosierventils 24 und damit eine Dosierung von Reduktionsmittel 24 zum Abgassystem 12 noch nicht erfolgt. Bei dieser Ausgestaltung wird das zweite Stromprofil 48 durch Anlegen einer getakteten Gleichspannung an eine Magnetspule der Aktorik des Reduktionsmitteldosierventils 24 erzeugt.

Die Erzeugung unterschiedlicher Stromprofile 46 und 48 erlaubt damit eine Entkopplung der Dosierungswirkung und der Heizwirkung des Stroms I durch die Magnetspule des Reduktionsmitteldosierventils 24 insofern, dass eine Heizung des Reduktionsmitteldosierventils 24 ohne gleichzeitige Dosierung von Reduktionsmittel möglich ist. Dies gilt unabhängig davon, ob das Reduktionsmitteldosierventil 24 und die Zuleitung 30 mit Reduktionsmittel 26 gefüllt sind oder nicht.

Es versteht sich aber, dass eine Heizwirkung durch ein zweites Stromprofil 48 auch in einem Dosierbetrieb erzeugt werden kann. In einer Ausgestaltung erfolgt dies dadurch, dass das zweite Stromprofil 48 durch Anlegen der vollen Gleichspannung an die Magnetspule der Aktorik des Reduktionsmitteldosierventils 24 erzeugt wird, ohne dass ein getaktetes Ein- und Ausschalten der Spannungsquelle 54 erfolgt. Es versteht sich ferner, dass das zweite Stromprofil sämtliche denkbaren Mischformen der Stromprofile 46 und 48 aufweisen kann. So kann das Grundstromniveau I3 des zweiten Stromprofils 48 über einen längeren Zeitraum aufrechterhalten werden, um eine kontinuierliche Heizwirkung zu erzielen. Wenn dann zusätzlich eine Dosierung von Reduktionsmittel 26 erfolgen soll, wird dem Grundstromniveau I3 die Differenz zum ersten Stromprofil 46, das erste Stromprofil 46 oder der Haltestrom I2 des ersten Stromprofils 46 überlagert, um ein zweites Stromprofil zu erzeugen. In diesem Fall wird das Reduktionsmitteldosierventil 24 vorübergehend geöffnet, wobei die Heizwirkung auch bei nicht geöffnetem Reduktionsmitteldosierventil 24 erhalten bleibt.

Um eine verstärkte Heizwirkung ohne Dosierung von Reduktionsmittel 26 zu erzielen, sieht eine weitere Ausgestaltung vor, dass das Steuergerät 14 die Pumpe 32 so steuert, dass die Pumpe 32 Reduktionsmittel aus der Zuleitung 30 und dem Reduktionsmitteldosierventil 24 in den Vorratsbehälter 28 zurück saugt. In diesem Fall kann das nun drucklose Reduktionsmitteldosierventil mit hohen Strömen und damit hohen Heizwirkungen beheizt werden, ohne dass eine unerwünschte Dosierung von Reduktionsmittel 26 zum Abgassystem 12 erfolgt.

Figur 4 zeigt eine weitere Ausgestaltung, bei der das Steuergerät 14 dazu eingerichtet ist, ein zweites Stromprofil durch Anlegen einer Wechselspannung an eine Magnetspule der Aktorik des Reduktionsmitteldosierventils zu erzeugen. Dabei weist die Endstufe 52 nach der Figur 4 eine Wechselspannungsquelle 64 auf, die die Gleichspannungsquelle 54 aus der Figur 3 ersetzt oder ergänzt. Mit den notwendigen Änderungen lassen sich sämtliche in Verbindung mit der Figur 3 erläuterten Ausgestaltungen auch mit der Wechselspannungsquelle 64 nach der Figur 4 erzielen. So kann eine Wechselspannungsquelle 64, zum Beispiel eine Wechselspannungsquelle mit steuerbarer Frequenz mit einer so hohen Frequenz betrieben werden, dass das Reduktionsmitteldosierventil 24 wegen seiner mechanischen Trägheit dieser Frequenz nicht folgen kann.

Der dennoch durch den Ohmschen Widerstand 60 fließende Wechselstrom heizt dann das Reduktionsmitteldosierventil 24 auf. Auch diese Ausgestaltung kann unabhängig von einer Füllung des Reduktionsmitteldosierventils 24 und seiner Zuleitung 30 mit Reduktionsmittel 26 durchgeführt werden.

Wenn eine Öffnung des Reduktionsmitteldosierventils 24 erlaubt oder gewünscht ist, sieht eine weitere Ausgestaltung einen Betrieb mit einer Frequenz der Wechselspannung vor, die so niedrig ist, dass ein nicht eingefrorenes Reduktionsmitteldosierventil 24 mit der Frequenz der Wechselspannung öffnet und schließt. Die veränderte Frequenz kann entweder durch alternatives Zuschalten einer weiteren Wechselspannungsquelle, die einen Wechselstrom mit niedrigerer Frequenz bereitstellt, oder durch eine gesteuerte Veränderung der Frequenz der Wechselspannungsquelle 64 erfolgen.

Als weitere Alternative kann die Magnetspule über separate Schalter auch alternativ oder ergänzend mit einer Gleichspannungsquelle 54 und einer Wechselspannungsquelle 64 verbunden sein, so dass sich die Magnetspule nur mit dem Strom aus einer der beiden Spannungsquellen 54, 64 oder mit der Summe der Ströme gespeist wird.

Auch hier gilt, das ein Öffnen des Reduktionsmitteldosierventils 24 erlaubt ist, wenn vor dem Öffnen ein Rücksaugen von Reduktionsmittel aus der Zuleitung 30 und dem Reduktionsmitteldosierventil 24 erfolgt ist

Zur weiteren Verbesserung der Heizwirkung sieht eine weitere Ausgestaltung vor, dass das Reduktionsmitteldosierventil 24 und seine Zuleitung 30 abwechselnd mit Reduktionsmittel 26 befüllt und entleert wird, um mit warmem Reduktionsmittel 26 Wärme an nicht elektrisch beheizte Teile des Systems zu fördern. Dabei wird das Reduktionsmittel 26 jeweils durch die Heizung 33 und/oder 34 erwärmt und durch die Pumpe 32 im System hin und her gepumpt.

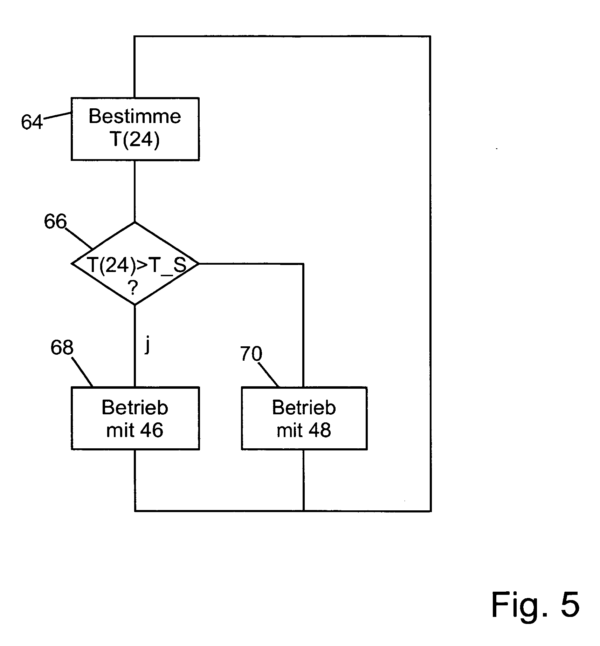

Figur 5 zeigt eine Ausgestaltung eines Verfahrens zum Betreiben des elektromagnetisch steuerbaren Reduktionsmitteldosierventils 24, wie es von dem Steuergerät 14 gesteuert wird. Dabei wird in einem Schritt 64 die Temperatur T(24) des Reduktionsmitteldosierventils 24 bestimmt. Wie weiter oben erläutert worden ist, kann dies durch eine Messung und/oder eine Modellierung erfolgen. Anschließend wird die so bestimmte Temperatur T(24) in einem Schritt 66 mit einem vorbestimmten Schwellenwert T_S verglichen, der Temperaturbereiche mit und ohne Einfriergefahr voneinander trennt. Wenn T(24) größer ist als der Schwellenwert T_S, verzweigt das Programm zu dem Schritt 68, in dem das Reduktionsmitteldosierventil ohne spezielle Heizmaßnahmen mit dem ersten Stromprofil 46 betrieben wird. Ist die Temperatur T(24) dagegen kleiner als der Schwellenwert T_S, erfolgt im Schritt 70 ein Betrieb des Reduktionsmitteldosierventils 24 mit dem zweiten Stromprofil 48.

## Patentansprüche

1. Verfahren zum Betreiben eines elektromagnetisch steuerbaren Reduktionsmitteldosierventils (24), das im Abgassystem (12) eines Verbrennungsmotors (10) angeordnet ist und das für eine Dosierung von Reduktionsmittel (26) mit einem ersten Stromprofil (46) angesteuert wird, **dadurch gekennzeichnet, dass** ein Maß für die Temperatur (T(24)) des Reduktionsmitteldosierventils (24) ermittelt und mit einem Schwellenwert (T_S) verglichen wird und dass dann, wenn die Temperatur (T(24)) größer ist als der Schwellenwert (T_S), das Reduktionsmitteldosierventil (24) mit dem ersten Stromprofil (46) betrieben wird und dann, wenn die Temperatur (T(24)) kleiner ist als der Schwellenwert (T_S), das Reduktionsmitteldosierventil (24) mit einem zweiten Stromprofil (48) betrieben wird, das sich von dem ersten Stromprofil (46) unterscheidet.

2. Verfahren nach Anspruch 1, **dadurch gekennzeichnet, dass** das zweite Stromprofil (48) durch Anliegen einer Gleichspannung an eine Magnetspule der Aktorik des Reduktionsmitteldosierventils (24) erzeugt wird.

3. Verfahren nach Anspruch 1, **dadurch gekennzeichnet, dass** das zweite Stromprofil (48) durch Anlegen einer Wechselspannung an eine Magnetspule der Aktorik des Reduktionsmitteldosierventils (24) erzeugt wird.

4. Verfahren nach Anspruch 2, **dadurch gekennzeichnet, dass** die Gleichspannung so vorbestimmt ist, dass noch keine Öffnung des Reduktionsmitteldosierventils (24) erfolgt.

5. Verfahren nach Anspruch 3, **dadurch gekennzeichnet, dass** die Frequenz der Wechselspannung so groß ist, dass das Reduktionsmitteldosierventil (24) wegen seiner mechanischen Trägheit nicht öffnet.

6. Verfahren nach einem der Ansprüche 4 und 5, **dadurch gekennzeichnet, dass** es unabhängig von einer Füllung des Reduktionsmitteldosierventils (24) und seiner Zuleitung (30) mit Reduktionsmittel (26) durchgeführt wird.

7. Verfahren nach Anspruch 2, **dadurch gekennzeichnet, dass** die Gleichspannung so vorbestimmt ist, dass sie größer als eine Schwellenspannung ist, bei der ein nicht eingefrorenes Reduktionsmitteldosierventil (24) öffnet.

8. Verfahren nach Anspruch 3, **dadurch gekennzeichnet, dass** die Frequenz der Wechselspannung so niedrig ist, dass ein nicht eingefrorenes Reduktionsmitteldosierventil (24) mit der Frequenz der Wechselspannung öffnet und schließt.

9. Verfahren nach einem der Ansprüche 7 und 8, **dadurch gekennzeichnet, dass** vor seiner Durchführung ein Rücksaugen von Reduktionsmittel (26) aus dem Reduktionsmitteldosierventil (24) und seiner Zuleitung (30) erfolgt.

10. Verfahren nach einem der vorhergehenden Ansprüche, **dadurch gekennzeichnet, dass** das Reduktionsmitteldosierventil (24) und seine Zuleitung (30) abwechselnd mit Reduktionsmittel (26) befüllt und entleert wird, um mit warmem Reduktionsmittel Wärme an nicht elektrisch beheizte Teile des Systems zu fördern.

11. Zur Steuerung eines elektromagnetisch steuerbaren, im Abgassystem (12) eines Verbrennungsmotors (10) angeordneten Reduktionsmitteldosierventils (24) eingerichtetes Steuergerät (14), das dazu eingerichtet ist, das Reduktionsmitteldosierventil (24) für eine Dosierung von Reduktionsmittel (26) mit einem ersten Stromprofil (46) anzusteuern, **dadurch gekennzeichnet, dass** das Steuergerät (14) dazu eingerichtet ist, ein Maß für die Temperatur (T(24)) des Reduktionsmitteldosierventils (24) zu ermitteln und mit einem Schwellenwert (T_S) zu vergleichen und dann, wenn die Temperatur (T(24)) größer ist als der Schwellenwert (T_S), das Reduktionsmitteldosierventil (24) mit dem ersten Stromprofil (46) zu betreiben und dann, wenn die Temperatur (T(24)) kleiner ist als der Schwellenwert (T_S) mit einem zweiten Stromprofil (48) zu betreiben, das sich von dem ersten Stromprofil (46) unterscheidet.

12. Steuergerät (14) nach Anspruch 11 **dadurch gekennzeichnet, dass** es dazu eingerichtet ist, einen Ablauf eines Verfahrens nach einem der abhängigen Verfahrensansprüche zu steuern.

## Claims

1. Method for operating an electromagnetically controllable reducing agent dosing valve (24) which is arranged in the exhaust system (12) of an internal combustion engine (10) and which is acted on with a first current profile (46) in order to dose reducing agent (26), **characterized in that** a measure for the temperature (T(24)) of the reducing agent dosing valve (24) is determined and compared with a threshold value (T_S), and **in that** the reducing agent dosing valve (24) is operated with the first current profile (46) if the temperature (T(24)) is higher than the threshold value (T_S), and the reducing agent dosing valve (24) is operated with a second current profile (48), which differs from the first current profile (46), if the temperature (T(24)) is lower than the threshold value (T_S).

2. Method according to Claim 1, **characterized in that** the second current profile (48) is generated by applying a DC voltage to a magnet coil of the actuator arrangement of the reducing agent dosing valve (24).

3. Method according to Claim 1, **characterized in that** the second current profile (48) is generated by applying an AC voltage to a magnet coil of the actuator arrangement of the reducing agent dosing valve (24).

4. Method according to Claim 2, **characterized in that** the DC voltage is predetermined such that no opening of the reducing agent dosing valve (24) takes place.

5. Method according to Claim 3, **characterized in that** the frequency of the AC voltage is so high that the reducing agent dosing valve (24) does not open on account of its mechanical inertia.

6. Method according to one of Claims 4 and 5, **characterized in that** said method is carried out independently of a filling level of reducing agent (26) in the reducing agent dosing valve (24) and in the feed line (30) thereof.

7. Method according to Claim 2, **characterized in that** the DC voltage is predetermined so as to be higher than a threshold voltage at which a non-frozen reducing agent dosing valve (24) opens.

8. Method according to Claim 3, **characterized in that** the frequency of the AC voltage is so low that a non-frozen reducing agent dosing valve (24) opens and closes with the frequency of the AC voltage.

9. Method according to one of Claims 7 and 8, **characterized in that**, before said method is carried out, reducing agent (26) is sucked back out of the reducing agent dosing valve (24) and the feed line (30) thereof.

10. Method according to one of the preceding claims, **characterized in that** the reducing agent dosing valve (24) and the feed line (30) thereof are alternately filled with reducing agent (26) and emptied in order to convey heat by means of warm reducing agent to non-electrically heated parts of the system.

11. Control unit (14) set up for controlling an electromagnetically controllable reducing agent dosing valve (24) which is arranged in the exhaust system (12) of an internal combustion engine (10), which control unit (14) is set up to actuate the reducing agent dosing valve (24) with a first current profile (46) in order to dose reducing agent (26), **characterized in that** the control unit (14) is set up to determine a measure for the temperature (T(24)) of the reducing agent dosing valve (24) and to compare said measure with a threshold value (T_S), and to operate the reducing agent dosing valve (24) with the first current profile (46) if the temperature (T(24)) is higher than the threshold value (T_S), and to operate the reducing agent dosing valve (24) with a second current profile (48), which differs from the first current profile (46), if the temperature (T(24)) is lower than the threshold value (T_S).

12. Control unit (14) according to Claim 11, **characterized in that** said control unit is set up to control the execution of a method according to one of the dependent method claims.

## Revendications

1. Procédé pour faire fonctionner une soupape de dosage d'agent réducteur à commande électromagnétique (24), qui est disposée dans le système de gaz d'échappement (12) d'un moteur à combustion interne (10) et qui est commandée pour un dosage d'agent réducteur (26) avec un premier profil d'écoulement (46), **caractérisé en ce qu'**une mesure de la température (T(24)) de la soupape de dosage d'agent réducteur (24) est déterminée et est comparée à une valeur seuil (T_S) et **en ce qu'**ensuite, si la température (T(24)) est supérieure à la valeur seuil (T_S), la soupape de dosage d'agent réducteur (24) est commandée avec le premier profil d'écoulement (46), et si la température (T(24)) est inférieure à la valeur seuil (T_S), la soupape de dosage d'agent réducteur (24) est commandée avec un deuxième profil d'écoulement (48) qui est différent du premier profil d'écoulement (46).

2. Procédé selon la revendication 1, **caractérisé en ce que** le deuxième profil d'écoulement (48) est produit en appliquant une tension continue à une bobine magnétique du système d'actionneurs de la soupape de dosage d'agent réducteur (24).

3. Procédé selon la revendication 1, **caractérisé en ce que** le deuxième profil d'écoulement (48) est produit en appliquant une tension alternative à une bobine magnétique du système d'actionneurs de la soupape de dosage d'agent réducteur (24).

4. Procédé selon la revendication 2, **caractérisé en ce que** la tension continue est prédéterminée de telle sorte qu'aucune ouverture de la soupape de dosage d'agent réducteur (24) n'ait lieu.

5. Procédé selon la revendication 3, **caractérisé en ce que** la fréquence de la tension alternative est telle que la soupape de dosage d'agent réducteur (24) ne s'ouvre pas en raison de son inertie mécanique.

6. Procédé selon l'une quelconque des revendications 4 et 5, **caractérisé en ce qu'**il est mis en oeuvre indépendamment d'un remplissage de la soupape de dosage d'agent réducteur (24) et de sa conduite d'amenée (30) en agent réducteur (26).

7. Procédé selon la revendication 2, **caractérisé en ce que** la tension continue est prédéterminée de telle sorte qu'elle soit supérieure à une tension de seuil, à laquelle une soupape de dosage d'agent réducteur (24) non grippée s'ouvre.

8. Procédé selon la revendication 3, **caractérisé en ce que** la fréquence de la tension alternative est suffisamment basse pour qu'une soupape de dosage d'agent réducteur (24) non grippée s'ouvre et se ferme avec la fréquence de la tension alternative.

9. Procédé selon l'une quelconque des revendications 7 et 8, **caractérisé en ce qu'**avant sa mise en oeuvre, on effectue une réaspiration de l'agent réducteur (26) hors de la soupape de dosage d'agent réducteur (24) et de sa conduite d'amenée (30).

10. Procédé selon l'une quelconque des revendications précédentes, **caractérisé en ce que** la soupape de dosage d'agent réducteur (24) et sa conduite d'amenée (30) sont remplies et vidées en alternance avec de l'agent réducteur (26), afin d'acheminer avec de l'agent réducteur chaud de la chaleur à des pièces du système non chauffées électriquement.

11. Appareil de commande (14) prévu pour commander une soupape de dosage d'agent réducteur (24) pouvant être commandée de manière électromagnétique, disposée dans le système de gaz d'échappement (12) d'un moteur à combustion interne (10), qui est prévu pour commander la soupape de dosage d'agent réducteur (24) pour un dosage d'agent réducteur (26) avec un premier profil d'écoulement (46), **caractérisé en ce que** l'appareil de commande (14) est prévu pour déterminer une mesure de la température (T(24)) de la soupape de dosage d'agent réducteur (24) et pour la comparer à une valeur seuil (T_S), et si la température (T(24)) est supérieure à la valeur seuil (T_S), pour commander la soupape de dosage d'agent réducteur (24) avec le premier profil d'écoulement (46), et si la température (T(24)) est inférieure à la valeur seuil (T_S), pour la commander avec un deuxième profil d'écoulement (48) qui est différent du premier profil d'écoulement (46).

12. Appareil de commande (14) selon la revendication 11, **caractérisé en ce qu'**il est prévu pour commander un déroulement d'un procédé selon l'une quelconque des revendications de procédé précédentes.
